# EUROPEAN PATENT APPLICATION

(11) **EP 3 879 171 A1**
(43) Date of publication of application: **15.09.2021**
(21) Application number: 19882947.5
(22) Date of filing: 30.10.2019
(51) Int. Cl.: F21S 41/20, F21S 43/20, F21S 41/141, F21S 43/14, F21W 107/10, F21Y 115/10

(54) **COLLIMATOR, LIGHTING STRUCTURE, VEHICLE LAMP AND CORRESPONDING VEHICLE**

(30) Priority: 08.11.2018 CN 201821841235 U
(71) Applicant: Wuhu Valeo Automotive Lighting Systems Co., Ltd., Wuhu Anhui 241009 (CN)
(72) Inventor: CHENG, Qian, Wuhan, Hubei 430056 (CN); GAO, Yagui, Wuhan, Hubei 430056 (CN); WU, Sihua, Wuhan, Hubei 430056 (CN)
(74) Representative: Valeo Visibility
(86) International application number: PCT/CN2019/114234
(87) International publication number: WO 2020/093913

(57) **Abstract**

An object of the present invention is to provide a collimator, a lighting structure, a lighting method, a vehicle lamp and a corresponding vehicle. The collimator according to the present invention is intended to solve the problem of corner illumination. The collimator comprises: a light exit part; a collimating part; and at least one fitting part; wherein the at least one fitting part is used for fitting a portion of the shape of a lamp corresponding to the collimator, and the fitting part is realized by a Fresnel lens; the fitting part corresponds to a portion of at least one arc, the arc being located on a concentric circle corresponding to the circle center of the collimating part. The present invention has the following advantages: by using an arc, it is possible to fit lamp shapes in multiple forms, and the characteristics of the Fresnel lens are utilized to enable light rays of the fitting part to also be calibrated as parallel emergent light, such that corners of the lamp can also provide a good lighting effect.

## Description

### Technical Field

The present invention relates to the field of lighting, in particular to a collimator, a lighting structure, a lighting method, a vehicle lamp and a corresponding vehicle.

### Background Art

In order to satisfy the dual requirements of providing light and having an attractive appearance, many lamps, in particular vehicle lamps used on vehicles, often have an irregular shape. The corners of such irregularly shaped lamps are often "dead corners" with regard to lighting, which cannot be fully illuminated. In order to enable the corners of irregular shapes to be lit up uniformly too, it is often necessary to provide special light sources for these corners.

### Summary of the Invention

An object of the present invention is to provide a collimator, in order to solve the problem of corner illumination.

According to one aspect of the present invention, a collimator is provided, wherein the collimator comprises:
a light exit part;
a collimating part;
and at least one fitting part;
wherein the at least one fitting part is used for fitting a portion of the shape of a lamp corresponding to the collimator, and the fitting part is realized by a Fresnel lens; the fitting part corresponds to a portion of at least one arc, the arc being located on a concentric circle corresponding to the circle center of the collimating part.

Those skilled in the art will understand that through the use of the fitting part, it is possible to achieve comprehensive fitting of the shapes of the collimator and the lamp, thereby expanding the range of light rays of a light source to corner parts of the lamp, thus enabling the lamp to provide light rays corresponding to the shape thereof, for greater brightness and uniformity.

In the collimator according to the present invention, the fitting part is sawtooth-shaped, each layer of a sawtooth structure being realized by an arc-shaped Fresnel lens segment, and the fitting part fits the shape of the lamp by means of multiple layers of arcs of different lengths.

Those skilled in the art will understand that better fitting with the lamp shape can be achieved by using sawtooth-shaped arcs for fitting.

In the collimator according to the present invention, each layer of the sawtooth structure of the fitting part can collimate a light beam of a light source.

Those skilled in the art will understand that due to the characteristics of the Fresnel lens itself, the light beam can be collimated, thereby increasing the uniformity of brightness of various parts of the lamp.

In the collimator according to the present invention, the fitting part extends from an edge of the collimating part.

Those skilled in the art will understand that according to the solution of this embodiment, the fitting part only needs to be used for fitting at an edge part; at the center, the use of the collimating part is sufficient to achieve a collimation effect, thus the number of fitting parts needed is reduced.

In the collimator according to the present invention, the collimating part is a bowl-shaped structure, and the fitting part extends backward from a bowl edge of the bowl-shaped structure.

Those skilled in the art will understand that by extending backward, it is possible to receive the light beam from the light source more effectively.

In the collimator according to the present invention, an included angle between a direction of extension of each of the at least one fitting part and a central axis of the collimating part is less than 90°.

Those skilled in the art will understand that when the included angle is less than 90°, the light beam from the light source can be received more effectively, thereby increasing the efficiency of use of the light source.

In the collimator according to the present invention, the direction of extension of the fitting part is the direction of a connecting line from the center point of an opening surface of the collimator to an outermost point of the fitting part.

Those skilled in the art will understand that by controlling the angle of the direction of extension, it is possible to better control the light beam received by the collimator.

In the collimator according to the present invention, the collimating part and the at least one fitting part are a one-piece member.

Those skilled in the art will understand that the one-piece member can be manufactured and used more easily.

In the collimator according to the present invention, the collimating part further comprises an outer ring, the outer ring being located on an arc concentric with the collimating part, and connecting various fitting parts.

Those skilled in the art will understand that as the fitting parts are connected by means of the outer ring, and fitting is only used for those parts that require it, the complexity of the manufacturing process can be reduced.

In the collimator according to the present invention, the outer ring of the collimating part is realized entirely by the fitting part.

Those skilled in the art will understand that when the outer ring is realized entirely by the fitting part, it is possible to adapt to more complex and varied shapes.

According to another aspect of the present invention, a lighting structure is further provided, wherein the lighting structure comprises the collimator, and a light source.

In the lighting structure according to the present invention, the light source is an LED light source.

According to another aspect of the present invention, a vehicle lamp is further provided, wherein the vehicle lamp comprises the lighting structure.

According to another aspect of the present invention, a vehicle is further provided, wherein the vehicle comprises the vehicle lamp.

Compared with the prior art, the present invention has the following advantages: by using the sawtooth-shaped arc with adjustable length and width to fit lamp shapes in multiple forms, and utilizing the characteristics of the Fresnel lens, light rays of the fitting part are enabled to also be calibrated as parallel emergent light, such that corners of the lamp can also provide a good lighting effect.

### Brief Description of the Drawings

Other features, objects and advantages of the present invention will become more obvious through perusal of a detailed description of non-limiting embodiments which make reference to the accompanying drawings below:
Fig. 1 shows an exemplary schematic drawing of an irregular lamp.
Fig. 2 shows a schematic drawing of a lamp using a collimator according to the present invention.
Figs. 3a, 3b and 3c show schematically some embodiments of the fitting part.
Fig. 4 shows schematically a sectional drawing, taken along axis A-A, of the collimator shown in Fig. 2.
Fig. 5 shows schematically an included angle between a direction of extension of the fitting part and a central axis of the collimating part.
Fig. 6 shows a schematic light path drawing corresponding to the collimator shown in Fig. 3.

**List of reference labels:**

| | | | |
|---|---|---|---|
| 010 | Lamp | 100 | Collimator |
| 101 | Collimating part | 1011 | Bowl-shaped structure |
| 1012 | Bowl edge | 1013 | Bowl base |
| 102 | Fitting part | 1021 | Sawtooth structure |
| 103 | Outer ring | 104 | Light exit part |
| 200 | Support part | 300 | Light source |

### Detailed Description of the Invention

The present invention will be described in further detail below in conjunction with the accompanying drawings.

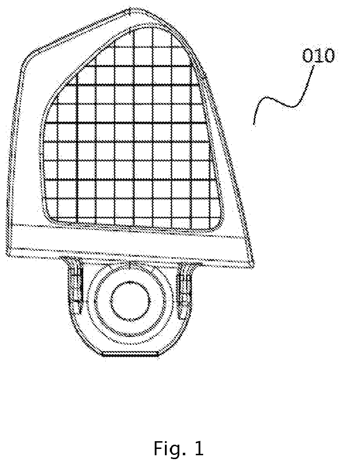

Referring to Fig. 1, Fig. 1 shows schematically a simplified structural drawing of a shelf according to an embodiment of the present invention.

The collimator according to the present invention comprises a light exit part 104, a collimating part 101 and at least one fitting part 102.

The collimating part 101 is a transparent bowl-shaped structure 1011; when a light beam of a light source is incident from the back of a bowl base thereof, the collimating part 101 can calibrate the incident light beam as a light beam that emerges in a parallel fashion along a central axis of the bowl-shaped structure 1011.

Preferably, the bowl-shaped structure 1011 has a bowl edge 1012, and the fitting part 102 extends backward from the bowl edge 1012. Specifically, the fitting part 102 extends from the bowl edge 1012 in such a direction as to approach the bowl base 1013, from an outer side of the bowl-shaped structure 1011.

More preferably, an included angle between a direction of extension of each of the at least one fitting part 102 and the central axis of the collimating part 101 is less than 90°.

The direction of extension of the fitting part 102 is the direction of a connecting line from the center point of an opening surface of the collimating part 101 to an outermost point of the fitting part 102.

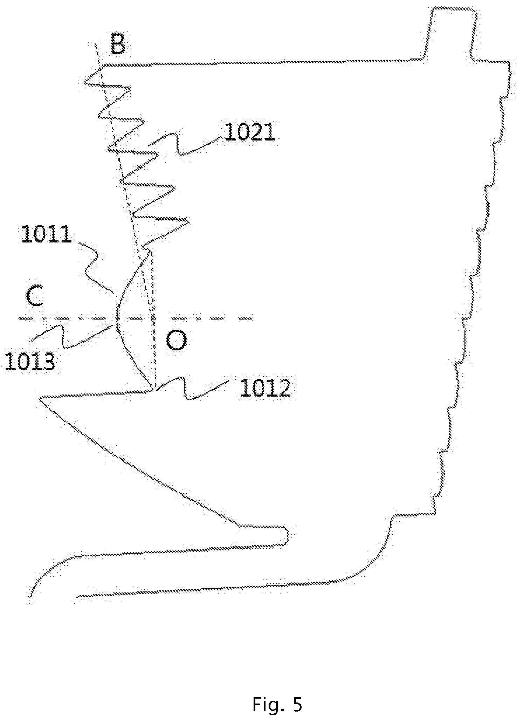

Referring to Fig. 5, the center point of the opening surface of the collimator 101, i.e. the point of intersection of the central axis and the opening surface, is labelled O, the outermost point of the fitting part 102 is labelled B, the center point of the bowl base 1023 is C, and the included angle between the direction of extension OB of the fitting part 102 and the central axis OC is 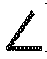 BOC, wherein the included angle <BOC is less than 90°. The light beam of the light source can thus be effectively calibrated by the fitting part 102.

The at least one fitting part 102 according to the present invention is used for fitting a portion of the shape of a lamp corresponding to the collimator 100, and the fitting part 102 is realized by a Fresnel lens; the fitting part corresponds to a portion of at least one arc, the arc being located on a concentric circle corresponding to the circle center of the collimating part 101.

Preferably, the fitting part 102 extends from an edge of the collimating part 101. Moreover, the position where it ends is determined according to the lamp shape.

Preferably, the fitting part 102 uses a sawtooth-shaped structure for fitting, wherein each layer of sawtooth is realized by an arc-shaped Fresnel lens segment, and wherein the shape of the lamp is fitted by means of multiple arc segments of different lengths.

In addition, each layer of sawtooth of the sawtooth structure of the fitting part 102 can collimate the light beam of the light source.

Specifically, when a light beam from the light source is incident on each layer of the sawtooth structure 1021 of the fitting part, each layer of the sawtooth structure can cause the light beam, when emerging from a sawtooth surface, to be parallel to and in the same direction as an emergent light beam of the collimating part 101.

Those skilled in the art will understand that configuring each layer of the sawtooth structure 1021 to lie on a concentric arc corresponding to the collimating part 101 enables emergent light rays thereon to be parallel to emergent light rays of the collimating part 101.

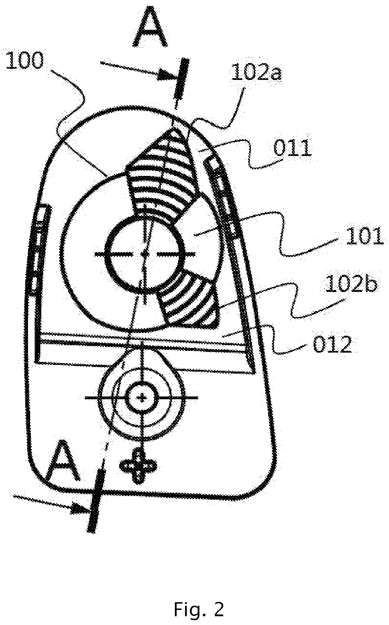

Referring to Fig. 2, the collimator 100 shown in Fig. 2 comprises an innerring collimating part 101 and two fitting parts 102a and 102b.

The two fitting parts 102a and 102b fit two corners 011 and 012, respectively, of the lamp corresponding to the collimator 100.

Those skilled in the art will understand that the shapes and sizes of the required fitting parts can be determined according to the shape of the lamp, and the shapes and sizes of various fitting parts can be different. Referring to Fig. 2, the fitting part 102a and fitting part 102b contain different numbers of arcs, with different degrees of arc, etc.

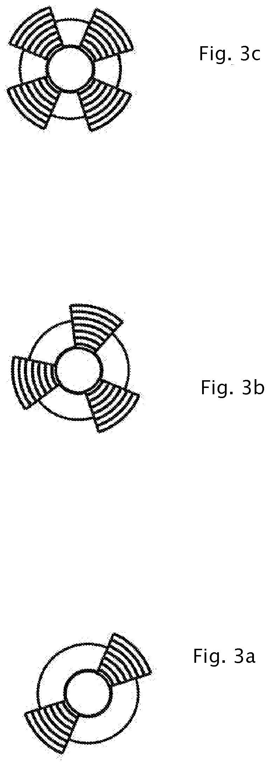

According to a preferred solution, the collimator 100 according to the present invention comprises at least one fitting part 102. Referring to Fig. 3, Fig. 3 shows schematically multiple embodiments of the fitting part 102. Fig. 3a shows schematically an embodiment in which two fitting parts 102 are used; Fig. 3b shows schematically an embodiment in which three fitting parts 102 are used; and Fig. 3c shows schematically an embodiment in which four fitting parts 102 are used.

Those skilled in the art will understand that the fitting parts 102 are not necessarily separated by equal angles or do not necessarily have a symmetrical structure in the collimator 100; rather, they correspond to the shape that actually needs to be fitted.

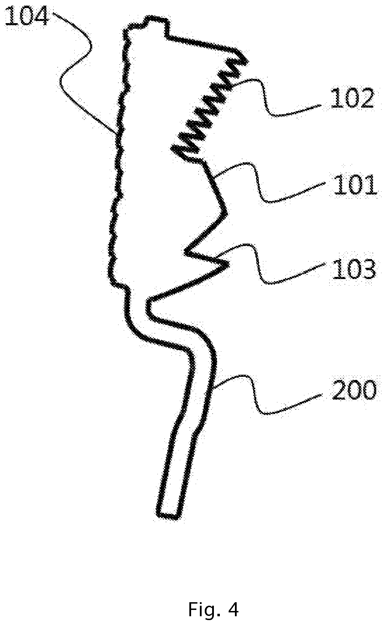

According to an embodiment of the present invention, referring to Fig. 4, Fig. 4 shows schematically a sectional drawing, taken along axis A-A, of the collimator 100 shown in Fig. 2.

The sectional drawing shown in Fig. 4 shows schematically the collimating part 101, the fitting part 102, an outer ring 103 contained in the collimator 100, and the light exit part 104.

That is, the collimator 100 further comprises the outer ring 103; the outer ring is located on an arc concentric with the collimating part 101, and configured to connect various fitting parts 102.

Preferably, the outer ring 103 is realized by part of a conical tube wall.

Preferably, a light beam calibrated by the outer ring 103 is parallel to a light beam calibrated by the collimating part 101.

According to another embodiment of the present invention, the outer ring 103 of the collimating part 101 is realized entirely by the fitting part 102.

According to another preferred embodiment, the collimator 100 may also have a support part 200, to facilitate mounting of the collimator 100.

Preferably, the support part 200 is used for mounting the collimator 100 onto a vehicle lamp of a motor vehicle.

The support part 200 may be independent of the collimator 100, or the support part 200 and the collimator 100 may be a one-piece member.

Of course, those skilled in the art will understand that the shape and size of the support part 200 can be determined according to actual circumstances and needs, without being restricted to the form shown in the drawings.

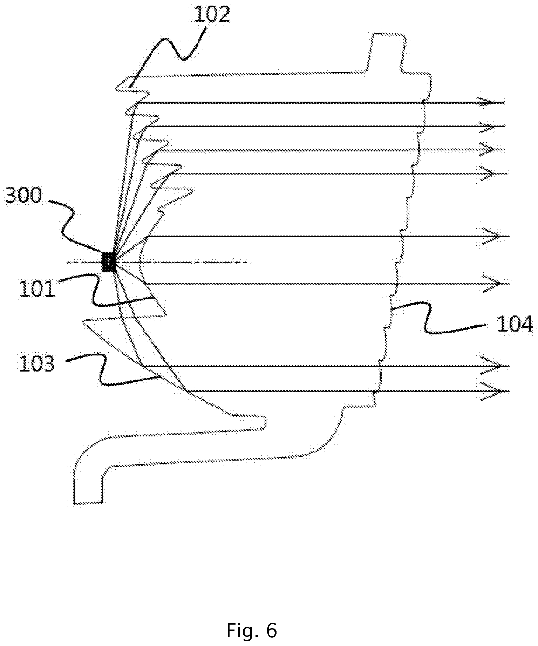

Referring to Fig. 6, Fig. 6 shows a schematic light path drawing of the lighting structure according to the present invention.

As can be seen, one portion of a light beam emitted by a light source 300 passes through the collimating part 101, one portion passes through the fitting part 102, and another portion of the light beam passes through the outer ring 103; all of these portions are then calibrated as parallel light beams, which then emerge.

The fitting part enables parallel light beams to also emerge from regions in the original lamp that were unreachable by relying on the collimating part 101 alone, and thus enables lamp corners that were originally dim to have a better lighting effect.

According to a preferred embodiment, the collimator 100 according to the present invention is a one-piece member. Preferably, it is an injection-molded one-piece member.

According to an embodiment of the present invention, a lighting structure using the above-mentioned collimator 100 is further disclosed.

According to an embodiment of the present invention, a vehicle lamp using the above-mentioned lighting structure is further disclosed.

According to an embodiment of the present invention, a vehicle using the above-mentioned vehicle lamp is further disclosed.

Compared with the prior art, the present invention has the following advantages: by using an arc, it is possible to fit lamp shapes in multiple forms, and the characteristics of the Fresnel lens are utilized to enable light rays of the fitting part to also be calibrated as parallel emergent light, such that corners of the lamp can also provide a good lighting effect.

To a person skilled in the art, it would be obvious that the present invention is not limited to the details of the demonstrative embodiments above, and could be implemented in other specific forms without departing from the spirit or basic features of the present invention. Thus, regardless of which viewpoint is taken, the embodiments should be regarded as being demonstrative and non-limiting; the scope of the present invention is defined by the attached claims and not by the explanation above, hence it is intended that all changes falling within the meaning and scope of equivalent key elements of the claims be included in the present invention. No reference labels in the claims should be regarded as limiting the claims concerned. In addition, it is obvious that the word "comprises" does not exclude other units or steps, and the singular does not exclude the plural. Multiple units or apparatuses presented in system claims may also be realized by one unit or apparatus by means of software or hardware. Words such as first and second are used to indicate designations, and do not indicate any specific order.

## Claims

1. A collimator (100), wherein the collimator (100) comprises:
a light exit part (104);
a collimating part (101);
and at least one fitting part (102);
wherein the at least one fitting part (102) is used for fitting a portion of the shape of a lamp corresponding to the collimator (100), and the fitting part (102) is realized by a Fresnel lens; the fitting part (102) corresponds to a portion of at least one arc, the arc being located on a concentric circle corresponding to the circle center of the collimating part (101).

2. The collimator (100) as claimed in claim 1, wherein the fitting part (102) is sawtooth-shaped, each layer of a sawtooth structure (1021) being realized by an arc-shaped Fresnel lens segment, and the fitting part (102) fits the shape of the lamp by means of multiple layers of arcs of different lengths.

3. The collimator (100) as claimed in claim 1 or 2, wherein each layer of the sawtooth structure (1021) of the fitting part (102) can collimate a light beam of a light source.

4. The collimator (100) as claimed in claim 1 or 2, wherein the fitting part (102) extends from an edge of the collimating part (101).

5. The collimator (100) as claimed in claim 4, wherein the collimating part (101) is a bowl-shaped structure (1011), and the fitting part (102) extends backward from a bowl edge (1012) of the bowl-shaped structure (1011).

6. The collimator (100) as claimed in claim 1 or 2, wherein an included angle between a direction of extension of each of the at least one fitting part (102) and a circle center axis of the collimating part (101) is less than 90°.

7. The collimator (100) as claimed in claim 6, wherein the direction of extension of the fitting part (102) is the direction of a connecting line from the center point of an opening surface of the collimating part (101) to an outermost point of the fitting part (102).

8. The collimator (100) as claimed in claim 1 or 2, wherein the collimating part (101) and the at least one fitting part (102) are a one-piece member.

9. The collimator (100) as claimed in claim 1 or 2, wherein the collimating part (101) further comprises an outer ring (103), the outer ring (103) being located on an arc concentric with the collimating part (101), and connecting various fitting parts (102).

10. The collimator (100) as claimed in claim 9, wherein the outer ring (103) of the collimating part (101) is realized entirely by the fitting part (102).

11. A lighting structure, wherein the lighting structure comprises the collimator (100) as claimed in any one of claims 1 - 10, and a light source (300).

12. The lighting structure as claimed in claim 11, wherein the light source (300) is an LED light source.

13. A vehicle lamp, wherein the vehicle lamp comprises the lighting structure as claimed in claim 11 or 12.

14. A vehicle, wherein the vehicle comprises the vehicle lamp as claimed in claim 13.
